# EUROPEAN PATENT APPLICATION

(11) **EP 4 708 382 A2**
(43) Date of publication of application: **11.03.2026**
(21) Application number: 26151423.6
(22) Date of filing: 12.01.2026
(51) Int. Cl.: H01M 4/134, H01M 4/36, H01M 4/38, H01M 4/62, H01M 10/0525

(54) **ANODE MATERIAL AND BATTERY**

(30) Priority: 21.01.2025 CN 202510102544
(71) Applicant: BTR New Material Group Co., Ltd., Shenzhen, Guangdong 518106 (CN)
(72) Inventor: HE, Peng, Shenzhen, 518106 (CN); XIAO, Chengmao, Shenzhen, 518106 (CN); GUO, Eming, Shenzhen, 518106 (CN); LIU, Yijia, Shenzhen, 518106 (CN); REN, Jianguo, Shenzhen, 518106 (CN); HUANG, Youyuan, Shenzhen, 518106 (CN); HE, Xueqin, Shenzhen, 518106 (CN)
(74) Representative: Novagraaf Technologies

(57) **Abstract**

Provided is an anode material and a battery. The anode material includes a carbon matrix and an active substance, and at least a portion of the active substance is distributed in the carbon matrix; and surface cleanliness of the anode material is γ, and γ≥60%. The anode material and the battery provided in the present disclosure can alleviate cyclic attenuation of the anode material, reduce side reactions between the anode material and an electrolyte solution, and reduce a gas production phenomenon of the anode material, thereby comprehensively improving the capacity, expansion performance, and cycling performance of the anode material.

## Description

### CROSS-REFERENCE TO RELATED APPLICATIONS

The present application claims priority to Chinese Patent Application No. 202510102544.7, named "Anode Material and Battery", filed on January 21, 2025, the application of which is hereby incorporated by reference in its entirety.

### Technical Field

The present disclosure relates to the technical field of battery materials, and specifically, to an anode material and a battery.

### Background

In recent years, with the development of the market, the integration of power devices, the increasing functionality, and the increasing need for energy supply, the lithium-ion batteries are widely used not only in mobile devices such as smartphones and portable computers, but also in the field of electric vehicles, power tools, etc. The development of lithium-ion batteries with higher energy density is the current trend. Positive and anode materials are the cores of a battery, and determine the working efficiency of the battery. At present, commercial anode materials are graphite, of which capacity has been close to a theoretical upper limit, such that amplitude further improved is limited. Therefore, there is an urgent need to develop a new generation of high energy density anode materials.

A silicon anode material is commonly considered as the next generation of battery anode materials, and has the advantages of being high in capacity, rich in source, relatively safe, etc. Some small particles adhere to a surface of the silicon anode material. These small particles are large in specific surface area, high in activation energy, and easy to lead to intensified side reactions between the anode material and an electrolyte solution, resulting in increased cyclic attenuation of the anode material. Furthermore, the anode material has a violent volume expansion effect during cycling, leading to pulverization and crushing of the anode material, thus resulting in increased cyclic attenuation. Therefore, how to alleviate cyclic attenuation of an anode material, improve the cycling stability of the anode material, and reduce the occurrence of side reactions is still one of the problems to be solved.

### Summary

The present disclosure provides an anode material and a battery. The anode material of the present disclosure can alleviate cyclic attenuation of the anode material, and reduce side reactions gas production phenomena, thereby comprehensively improving the capacity, expansion performance, and cycling performance of the anode material.

In a first aspect, the present disclosure provides an anode material, including a carbon matrix and an active substance, where at least a portion of the active substance is distributed in the carbon matrix.

Surface cleanliness of the anode material is γ, and γ≥60%, where the surface cleanliness of the anode material is measured by using the following test method.

An electron microscope image of the anode material is obtained, micro-powder adhesion of surfaces of 100 anode material particles is observed at 10000 magnification ratios randomly, particles with a particle size being 0.1 µm-1 µm adhering to the surfaces of the anode material particles are defined as micro-powder, the anode material particles with the number of micro-powder on the surfaces of the anode material particles being less than 20 are defined as clean particles, and the number of the clean particles in all the anode material particles is counted as A, where the surface cleanliness of the anode material is γ= A/100*100%.

The present disclosure provides a battery. The battery includes the anode material of the first aspect.

The technical solution of the present disclosure has at least the following beneficial effects.

The micro-powder on the surface of the anode material is large in specific surface area, and micro-powder particles generally have better reaction activity, and are easy to undergo a reaction with an electrolyte solution, leading to intensified side reactions between the anode material and the electrolyte solution, thus causing gas production of the anode material during a charging and discharging cycle to be increased. Moreover, due to a difference in sizes between the micro-powder and main particles of the anode material, expansion effects of the micro-powder and the main particles during lithium intercalation and deintercalation are inconsistent, leading to easy crushing and rupturing of the anode material, thus further increasing the occurrence of the side reactions between the anode material and the electrolyte solution. In the present disclosure, by controlling the surface cleanliness of the anode material above 60%, the micro-powder content on the surface of the anode material may be reduced, such that the side reactions between the anode material and the electrolyte solution are reduced, consumption of active lithium ions is reduced, and the gas production phenomenon of the anode material is effectively reduced, thereby improving the specific capacity and initial coulombic efficiency of the anode material. Furthermore, the expansion effect of the anode material is more balanced, and the crushing of the anode material particles may be reduced, thereby improving the rate performance and cycling performance of a battery prepared by the anode material.

### Brief Description of the Drawings

The present disclosure is further described below with reference to the drawings and examples.
FIG. 1 is a schematic structural diagram of a battery according to an example of the present disclosure.
FIG. 2 is an SEM diagram of an anode material prepared according to Example 1 of the present disclosure.
FIG. 3 is an SEM diagram of an anode material prepared according to Comparative example 2 of the present disclosure.

### Description of main component symbols

| | |
|---|---|
| Cathode plate | 1 |
| Anode plate | 2 |
| Separation film | 3 |
| Cathode current collector | 101 |
| Cathode active layer | 102 |
| Anode current collector | 201 |
| Anode active material layer | 202 |

### Detailed Description of the Embodiments

In order to better understand the technical solutions of the present disclosure, examples of the present disclosure are described in detail below with reference to the drawings.

It is to be clear that the described examples are only part of the examples of the present disclosure, not all the examples. All other examples obtained by those of ordinary skill in the art on the basis of the examples in the present disclosure without creative work fall within the scope of protection of the present disclosure.

The terms used in the examples of the present disclosure are only for describing specific examples and are not intended to limit the present disclosure. Singular forms "a/an", "said", and "the" used in the examples and appended claims of the present disclosure are also intended to include plural forms unless other meanings are clearly expressed in the context.

It is to be understood that, the term "and/or" used here is merely an association relationship describing related objects, which means that there may be three relationships, for example, A and/or B may indicate three cases: A exists alone, A and B exist simultaneously, and B exists alone. In addition, the character "/" as used herein generally indicates an "or" relationship between the front and back associated objects.

An anode material provided in an example of the present disclosure includes a carbon matrix and an active substance, and at least a portion of the active substance is distributed in the carbon matrix. Surface cleanliness of the anode material is γ, and γ≥60%, where the surface cleanliness of the anode material is measured by using the following test method.

An electron microscope image of the anode material is obtained, micro-powder adhesion of surfaces of 100 anode material particles is observed at 10000 magnification ratios randomly, particles with a particle size being 0.1 µm-1 µm adhering to the surfaces of the anode material particles are defined as micro-powder, the anode material particles with the number of micro-powder on the surfaces of the anode material particles being less than 20 are defined as clean particles, and the number of the clean particles in the 100 anode material particles is counted as A, where the surface cleanliness of the anode material is γ= A/100*100%.

Since the micro-powder on the surface of the anode material is large in specific surface area, and micro-powder particles generally have better reaction activity, and are easy to undergo a reaction with an electrolyte solution, intensified side reactions between the anode material and the electrolyte solution are caused, thus causing gas production of the anode material during a charging and discharging cycle to be increased. Moreover, due to a difference in sizes between the micro-powder and main particles of the anode material, expansion effects of the micro-powder and the main particles during lithium intercalation and deintercalation are inconsistent, leading to easy crushing and rupturing of the anode material, thus further increasing the occurrence of the side reactions with the electrolyte solution. In the present disclosure, by controlling the surface cleanliness of the anode material above 60%, the micro-powder content on the surface of the anode material may be reduced, such that the side reactions between the anode material and the electrolyte solution are reduced, consumption of active lithium ions is reduced, and the gas production phenomenon of the anode material is effectively reduced, thereby improving the specific capacity and initial coulombic efficiency of the anode material. Furthermore, the expansion effect of the anode material is more balanced, and the crushing of the particles may be reduced, thereby improving the rate performance and cycling performance of a battery prepared by the anode material.

In some embodiments, the surface cleanliness of the anode material is γ, and γ≥60%. The surface cleanliness of the anode material, γ, may specifically be 60%, 65%, 70%, 75%, 80%, 85%, 90%, 95%, 98%, or the like, or may definitely be other values within the above range, and is not limited herein. When the surface cleanliness is too small, that is, micro-powder particles adhering to the surfaces of the anode material particles are increased, the micro-powder particles are large in specific surface area and high in activation energy, and side reactions between the anode material and the electrolyte solution are intensified, thus leading to increased gas production of the anode material. Moreover, the increasing of the micro-powder particles also lead to bonding between the anode material particles, thus resulting in poor liquidity of the anode material and easy particle aggregation. In the present disclosure, by controlling the surface cleanliness of the anode material within the above range, the side reactions between the anode material and the electrolyte solution may be reduced, consumption of active lithium ions is reduced, the specific capacity and initial coulombic efficiency of the anode material are improved, and the gas production phenomenon of the anode material is effectively reduced. Preferably, the surface cleanliness γ of the anode material is ≥70%.

In some embodiments, a liquidity parameter of the anode material is t≤80 s/50 g. The liquidity parameter of the anode material, t, may specifically be 80 s/50 g, 75 s/50 g, 70 s/50 g, 65 s/50 g, 60 s/50 g, 55 s/50 g, 50 s/50 g, 45 s/50 g, 40 s/50 g, 30 s/50 g, 20 s/50 g, 10 s/50 g, 5 s/50 g, or any value within a range consisting of any two of the above values, and is not limited herein. In the present disclosure, by controlling the surface cleanliness of the anode material at the same time, the liquidity parameter of the anode material is synergistically controlled below 80 s/50 g, during preparation of an anode slurry, the dispersivity of the anode material in the slurry is improved, such that the bonding or aggregation between the particles can be reduced, and the uniformity of the anode material is improved, thereby effectively reducing the gas production phenomenon of the anode material. Furthermore, an appropriate liquidity parameter can also improve volume expansion of the anode material, so as to reduce local expansion stress concentration inside an anode plate, such that the anode material in the anode plate is better uniformly distributed, expansion stress is effectively released, and situations of the falling off, rupturing, etc. of the anode material are reduced, thereby improving the rate performance and cycling performance of a battery prepared by the anode material.

When the liquidity parameter t of the anode material is too large, the liquidity of the anode material particles deteriorates, easily leading to bonding or aggregation between the particles, thus resulting in increased gas production of the anode material. When the liquidity parameter t of the anode material is too small, that is, the liquidity of the anode material particles is better, excessive liquidity causes uneven surface coating of the anode material particles after they are coated, resulting in unevenly coated particles, and the side reactions between the anode material and the electrolyte solution are increased. Preferably, the liquidity parameter of the anode material is 10 s/50 g≤t≤50 s/50 g.

In some embodiments, a specific surface area of the anode material is ≤5 m²/g. Specifically, the specific surface area of the anode material may be 0.1 m²/g, 1 m²/g, 1.5 m²/g, 2 m²/g, 2.5 m²/g, 3 m²/g, 3.5 m²/g, 4 m²/g, 4.5 m²/g, 5 m²/g, or any value with in a range consisting of any two of the above values, and is not limited herein. The surface cleanliness of the anode material is good, and the specific surface area of the anode material can also be controlled within a small range. However, a too small specific surface area affects diffusion of lithium ions on the surface of the anode material and transmission in the anode material particles, thus affecting the infiltration capacity of the electrolyte solution. In the present disclosure, by controlling the specific surface area of the anode material within the above range, intercalation and deintercalation sites of the lithium ions can be increased while the side reactions caused by the micro-powder are reduced, the transmission efficiency of the lithium ions is improved, and the capacity of the battery prepared by the anode material is increased, and rate performance is improved. Preferably, the specific surface area of the anode material is 0.1-2.5 m²/g, and more preferably, the specific surface area of the anode material is 0.2-2.4 m²/g.

In some embodiments, a gas production value of the anode material is ≤1 mL/g/day, which may specifically be 1 mL/g/day, 0.9 mL/g/day, 0.8 mL/g/day, 0.7 mL/g/day, 0.6 mL/g/day, 0.5 mL/g/day, 0.2 mL/g/day, 0.1 mL/g/day, 0.01 mL/g/day, or any value with in a range consisting of any two of the above values, and is not limited herein. In the present disclosure, by controlling the gas production value of the anode material within a extremely small range, benefit from the surface cleanliness of the anode material within the above range, the micro-powder on the surfaces of the anode material particles is reduced, the side reactions between the micro-powder and the electrolyte solution are also greatly reduced, and the gas production value of the anode material is also greatly reduced. Preferably, the gas production value of the anode material is ≤0.2 mL/g/day, and more preferably, the gas production value of the anode material is ≤0.1 mL/g/day.

In some embodiments, an oil absorption value of the anode material is 30 mL/100 g-80 mL/100 g, which may specifically be 30 mL/100 g, 40 mL/100 g, 50 mL/100 g, 60 mL/100 g, 70 mL/100 g, 80 mL/100 g, or any value with in a range consisting of any two of the above values, and is not limited herein. It may be understood that, the oil absorption value is controlled within the above range while the surface cleanliness of the anode material is controlled within the above range, such that the capability of the anode material to adsorb and infiltrate the electrolyte solution is improved, the transmission efficiency of the lithium ions is improved, and the rate performance of the anode material is improved while the cycling performance stability of the battery prepared by the anode material is ensured.

In some embodiments, the anode material has pores, and a total pore volume of the anode material is 0.0001 cm³/g-0.1 cm³/g, which may specifically be 0.1 cm³/g, 0.08 cm³/g, 0.07 cm³/g, 0.06 cm³/g, 0.05 cm³/g, 0.04 cm³/g, 0.03 cm³/g, 0.02 cm³/g, 0.01 cm³/g, 0.0001 cm³/g, or the like, or may definitely be other values within the above range, and is not limited herein. The total pore volume of the anode material is within the above range, such that the specific capacity of the anode material may be increased, volume expansion caused by an active substance such as a silicon material during lithium intercalation and deintercalation is alleviated by reserving appropriate pores in the anode material, thereby improving the cycling performance of the battery prepared by the anode material.

In some embodiments, the pores in the anode material include mesopores. According to the standards of the International Union of Pure and Applied Chemistry (IUPAC), porous materials are classified into three categories based on pore size: microporous, mesoporous and macroporous. "Mesopores" materials have pore sizes in the range of 2 to 50 nm, which is between "microporous" materials (pore sizes less than 2 nm) and "macroporous" materials (pore sizes greater than 50 nm).

In some embodiments, in the anode material, a volume proportion of the pore volume of the mesopores in the total pore volume of the anode material is 25%-95%, which may specifically be 25%, 30%, 35%, 40%, 50%, 60%, 70%, 75%, 80%, 85%, 90%, 92%, 95%, or the like, and is not limited herein. Preferably, the volume proportion of the mesopores in the total pore volume of the anode material is 80%-95%.

It is to be noted that, the pores in the anode material are mainly the mesopores. During the charging and discharging of the battery prepared by the anode material, the mesopores in the anode material may provide a buffer space for expansion of the silicon material. In another aspect, stress dispersion distribution of the anode material is ensured; and when the anode material is applied to a lithium-ion battery, the specific capacity of the anode material may be increased, the volume expansion of the silicon material may also be alleviated, the particle strength of the anode material is improved, and collapse and fragmentation of the structure of the material during the rolling and cycling process of an electrode plate are reduced, such that the cycling performance, electrochemical performance, and the like of the anode material are improved under the synergistic effect of the above entire structure.

In some embodiments, a median particle size Dv50 of the anode material is 1 µm-30 µm, which may specifically be 1 µm, 5 µm, 7 µm, 10 µm, 12 µm, 15 µm, 18 µm, 19 µm, 20 µm, 30 µm, or any value with in a range consisting of any two of the above values, and is not limited herein. Preferably, the median particle size Dv50 of the anode material is 5 µm-25 µm.

In some embodiments, the carbon matrix includes at least one of hard carbon, soft carbon, graphite, mesocarbon microbeads, activated carbon, porous carbon, mesoporous carbon, or carbon gel. It may be understood that, the carbon matrix may play a role in supporting the skeleton by selecting the above materials, and also has good electrical conductivity, thereby enhancing the conductivity of the anode material.

In some embodiments, using the active substance being the silicon material as an example, the carbon matrix, which is the anode material with the silicon material removed, has pores, and at least a portion of the silicon material is located in the pores of the carbon matrix.

In some embodiments, an average pore diameter of the pores of the anode material with the silicon material removed is 1.0 nm-5.2 nm, which may specifically be 1.0 nm, 1.8 nm, 2.0 nm, 2.5 nm, 3.0 nm, 3.5 nm, 3.8 nm, 4.0 nm, 4.5 nm, 5.0 nm, 5.2 nm, or any value with in a range consisting of any two of the above values, and is not limited herein. The anode material with the silicon material removed is the carbon matrix. When a pore diameter of the pores of the carbon matrix is too small, it is difficult for gaseous precursors of the silicon material to penetrate into the pores, and the gaseous precursors easily aggregate on a surface of the carbon matrix to form a shell structure, leading to reduction in the content of the silicon material inside the anode material, thus causing the specific capacity of the anode material to reduce. When the pore diameter of the pores of the carbon matrix is too large, although the filling of the silicon material is facilitated, the problems of uneven distribution of the silicon material, silicon segregation, etc. are caused, leading to uneven expansion of the anode material, excessive local expansion stress, particle rupturing, etc., and thus resulting in reduction in the cycling stability of the anode material. Therefore, by controlling the average pore diameter of the pores of the carbon matrix within the above range, the combination of the carbon matrix and the silicon material is facilitated, and while the rate performance of the anode material is improved, the volume expansion of the silicon material is buffered, and the structure stability of the anode material is improved.

In the present disclosure, using the active substance being the silicon material as an example, a method for preparing the anode material with the silicon material removed includes the following steps: while stirring, 150 mL of an HF acid solution with a mass fraction of 20% is dropwise added to 10 g of the anode material to produce SiF₄ and a H₂ gas, and heat is released, until there is no gas generated; a supernatant acid solution is removed through centrifugation, then 150 mL of the HF acid solution with the mass fraction of 20% is added to the anode material again, stirring is performed for 12 h, and then the supernatant acid solution is removed again through centrifugation; and then the anode material is washed with pure water to neutral and dried, so as to obtain the anode material with the silicon material removed.

In some embodiments, a specific surface area of the anode material with the silicon material removed is 800 m²/g-2500 m²/g, which may specifically be 800 m²/g, 1200 m²/g, 1500 m²/g, 1800 m²/g, 2000 m²/g, 2200 m²/g, 2500 m²/g, or the like, or may definitely be other values within the above range, which is not limited herein.

In some embodiments, a total pore volume of the anode material with the silicon material removed is 0.4 cm³/g-1.5 cm³/g, which may specifically be 0.4 cm³/g, 0.6 cm³/g, 0.9 cm³/g, 1.0 cm³/g, 1.2 cm³/g, 1.3 cm³/g, 1.4 cm³/g, 1.5 cm³/g, or the like, or may definitely be other values within the above range, and is not limited herein. In the present disclosure, by controlling the total pore volume of the anode material with the silicon material removed (i.e., the carbon matrix) within the above range, the carbon matrix can provide an enough space to accommodate the silicon material, such that the specific capacity of the anode material may be increased, and it may also ensure that the anode material can reserve appropriate pores to alleviate the volume expansion of the silicon material during lithium intercalation and deintercalation, thereby improving the cycling performance of the anode material.

In some embodiments, the active substance includes at least one of non-carbon Group 4A elements. The non-carbon Group 4A elements may specifically be at least one of silicon, germanium, tin, lead, and alloys or solid solutions thereof, and the alloys may specifically be silicon aluminum alloy, silicon magnesium alloy, etc.

In some embodiments, the active substance includes the silicon material.

In some embodiments, the silicon material includes at least one of a silicon element, a silicon oxide material, or a silicon alloy.

In some embodiments, the silicon oxide material includes a silicon oxide SiOₓ, where 0 < x ≤ 2. The silicon oxide is a silicon oxygen complex, containing an oxygen atom and a silicon atom. A molar ratio of the oxygen atom to the silicon atom is 0-2 and does not include 0. The silicon oxide may be a substance compounded from two or more of SiO_{0.2}, SiO_{0.5}, SiO_{0.8}, SiO, SiO_{1.2}, SiO_{1.5}, SiO_{1.8}, SiO₂, etc., or a compound with a chemical formula being SiOₓ, which may also definitely be other values within the above range, and the present disclosure is not limited thereto.

In some embodiments, the silicon element includes at least one of crystalline silicon, amorphous silicon, or a complex of the crystalline silicon and the amorphous silicon. Preferably, the silicon material is the amorphous silicon. Compared to other types of silicon, the amorphous silicon is lower in expansion, facilitating improvement of the problem of large volume expansion of a silicon carbon anode material during lithium intercalation and deintercalation.

In some embodiments, the silicon material includes silicon particles. The shape of the silicon particles includes at least one of a dot shape, a spherical shape, an ellipsoidal shape, or a flaky shape.

In some embodiments, the silicon material further includes silicon element and a silicon oxide layer located on the surface of the silicon element. The silicon oxide layer includes silicon oxides with the general formula SiO_{y}, where 0.5<y≤2. SiO_{y} may specifically be SiO_{0.5}, SiO_{0.7}, SiO_{0.9}, SiO, SiO_{1.2}, SiO_{1.5}, SiO_{1.8}, SiO_{1.9}, SiO₂, etc., which is not limited herein.

In some embodiments, the silicon material further includes silicon element and a silicon oxide layer located on the surface of the silicon element. Based on the mass of the silicon material, a mass percentage content of oxygen in the silicon material is 1%-18%, which may specifically be 1%, 2%, 3%, 4%, 5%, 6%, 7%, 8%, 9%, 10%, 11%, 12%, 13%, 14%, 15%, 16%, 17%, 18%, or may definitely be other values within the above range, and is not limited herein. In the present disclosure, by controlling the mass percentage content of oxygen in the silicon material in the specified range, the formation of a stable silicon oxide layer on the surface of the silicon element is facilitated, which can reduce direct contact between the silicon element and the electrolyte, thereby reducing side reactions between them, improving the cycling stability of the anode material; it also helps maintain stable activity of the silicon material, enhancing the specific capacity of the anode material.

In some embodiments, a mass content of silicon in the silicon material is ≥99%.

In some embodiments, an average particle size of the silicon material is 0.1 nm-100 nm, which may specifically be 0.1 nm, 1 nm, 10 nm, 30 nm, 50 nm, 60 nm, 70 nm, 80 nm, 90 nm, 100 nm, or the like, or may also definitely be other values within the above range, and the present disclosure is not limited thereto. Within the above limit range, mechanical stress of the silicon material when expanding reduces with the reduction of the particle size, and transmission path of electrons and ions may be shortened after the size is reduced. Meanwhile, as the size of the silicon material is reduced, a gap between the adjacent silicon materials increases, such that a space may be reserved for expansion. It may be understood that, the average particle size of the silicon material is within the above range, such that a battery capacity of a lithium ion battery may be guaranteed, and an irreversible capacity loss is reduced. Preferably, the average particle size of the silicon material is 1 nm-50 nm, and more preferably, the average particle size of the silicon material is 1 nm-10 nm.

In some embodiments, at least a portion of the silicon material is located in the particles of the carbon matrix. The silicon material is located in the carbon matrix, the conductivity of the anode material may be improved through the carbon matrix, and a direct contact between the silicon material and the electrolyte solution is reduced at the same time, thereby reducing the occurrence of the side reactions.

In some embodiments, the anode material also has a coating layer, which is located on at least a portion of a surface of the carbon matrix and/or the active substance. It may be understood that, through the arrangement of the coating layer, in an aspect, the side reactions caused by the electrolyte solution entering the anode material, which leads to a reduction in initial coulombic efficiency and initial discharge specific capacity, may be reduced, and in another aspect, the coating layer may cooperate with the carbon matrix to buffer the volume expansion of the silicon material, thereby reducing the volume expansion of the entire anode material, and reducing the swelling of an electrode plate prepared by the anode material.

In some embodiments, a material of the coating layer includes at least one of carbon material, a metal oxide, or a nitride.

In some embodiments, the carbon material includes at least one of amorphous carbon or graphitized carbon.

In some embodiments, the coating layer may be a carbon layer. A thickness of the carbon layer is 0.1 nm-3000 nm, which may specifically be 0.1 nm, 0.5 nm, 1 nm, 5 nm, 10 nm, 20 nm, 50 nm, 80 nm, 100 nm, 200 nm, 300 nm, 500 nm, 800 nm, 1000 nm, 2000 nm, 3000 nm, or the like, or may definitely be other values within the above range, and is not limited herein. By controlling the thickness of the carbon layer within the above range, the stability of the particle structures of the anode material during cycling is maintained, such that the exposure of the silicon material on the surface of the anode material may be reduced, and the amount of SEI generated during charging and discharging due to the exposed silicon material are reduced, thereby improving the specific capacity and electrochemical performance of the anode material. Preferably, the thickness of the carbon layer is 0.5 nm-1000 nm, and more preferably, the thickness of the carbon layer is 5 nm-500 nm.

In some embodiments, the metal oxide includes at least one of oxides of Sn, Ge, Fe, Cu, **Ti,** Na, Mg, Al, Ca, and Zn.

In some embodiments, the nitride includes at least one of titanium nitride, vanadium nitride, cobalt nitride, nickel nitride, or carbon nitride.

In some embodiments, a mass proportion of the silicon material in the anode material is 30 wt%-65 wt%, that is, a mass proportion of silicon in the anode material is 30 wt%-65 wt%, which may specifically be 30 wt%, 35 wt%, 40 wt%, 45 wt%, 50 wt%, 55 wt%, 60 wt%, 65 wt%, or the like, or may also definitely be other values within the above range, and the present disclosure is not limited thereto. Within the above limit range, the mass proportion of the silicon material in the anode material, which is the mass proportion of silicon in the anode material, is high, such that the capacity of the anode material is increased.

In some embodiments, a mass percentage content of carbon in the anode material is 30 wt%-60 wt%, which may specifically be 30 wt%, 40 wt%, 50 wt%, 55 wt%, 60 wt%, or the like, or may definitely be other values within the above range, and is not limited herein.

In some embodiments, a mass percentage content of oxygen in the anode material is ≤5 wt%. Specifically, a mass proportion of the oxygen in the anode material may be 0 wt%, 1 wt%, 1.5 wt%, 2 wt%, 2.5 wt%, 3 wt%, 3.5 wt%, 4 wt%, 4.5 wt%, 5 wt%, and is not limited herein. It may be understood that, if the mass content of the oxygen is too high, the active substance in the anode material is partially oxidized. By controlling the mass content of the oxygen in the anode material within the above range, the specific capacity of the anode material may be increased.

In some embodiments, the active substance includes silicon material, with the mass ratio of silicon to carbon in the anode material ranging from 0.8 to 2.0. Specifically, a mass ratio of silicon to carbon in the anode material may be 0.8, 0.9, 1.0, 1.1, 1.2, 1.3, 1.4, 1.5, 1.6, 1.7, 1.8, 1.9, or 2.0, and is not limited herein.

An example of the present disclosure provides a method for preparing an anode material. The preparation method includes the following steps.

At S10, a surface cleaning treatment is performed on a carbon material having pores, and a carbon matrix is obtained through drying, where surface cleanliness of the carbon matrix is ≥65%.

At S20, the carbon matrix and a silicon material are combined to obtain a precursor.

At S30, the precursor is coated by using a coating material to obtain an anode material, where surface cleanliness of the anode material is γ≥60%.

In the above resolution, by cleaning a surface of the carbon material having pores, a micro-powder content on the surface of the carbon material may be effectively reduced, such that during the combination of the silicon material and the carbon matrix, the carbon matrix with high surface cleanliness can facilitate the entering of the silicon material in pores inside the carbon matrix, thereby reducing the probability of the silicon material adhering to the surface of the carbon matrix. Furthermore, during the coating of the carbon matrix with high surface cleanliness, the coating can also be more uniform. Through the coating treatment, the silicon material exposed on the surface of the carbon matrix may be further reduced, and the uniform coating layer may improve the liquidity of the anode material particles, thereby reducing bonding or aggregation between the particles. Furthermore, structural stability can also be improved, the structure collapse and particle rupturing of the anode material caused by volume expansion during lithium intercalation and deintercalation are reduced, and the occurrence of the side reactions is effectively reduced, thereby improving the cycling performance of the anode material, reducing the side reactions between the anode material and the electrolyte solution, and improving gas production.

At S10, the surface cleaning treatment is performed on the carbon material having pores, and the carbon matrix is obtained through drying, where the surface cleanliness of the carbon matrix is ≥65%.

In some embodiments, the surface cleaning treatment includes at least one of a flotation treatment or a dust removal treatment.

In some embodiments, a flotation solution used by the flotation treatment includes a flotation agent and a solvent.

In some embodiments, the flotation agent includes at least one of hexane, kerosene, diesel, gasoline, tetrachloroethylene, trichloroethylene, ethylene glycol ether, oleic acid, sodium alkyl sulfate, mixed amine, terpineol, 4-methyl-2-pentanol, humic acid, starch, polyacrylamide, sodium tripolyphosphate, or triethanolamine.

In some embodiments, the solvent includes at least one of water, methanol, ethanol, isopropanol, carbon tetrachloride, toluene, benzene, cyclohexane, cyclohexanone, toluene cyclohexanone, chlorobenzene, dichlorobenzene, acetone, methyl butanone, acetonitrile, pyridine, or phenol.

In some embodiments, a temperature for the flotation treatment is 20 °C-80 °C, which may specifically be 20 °C, 30 °C, 40 °C, 50 °C, 60 °C, 70 °C, 80 °C, or any value with in a range consisting of any two of the above values, and is not limited herein.

In some embodiments, a time for the flotation treatment is 1 h-48 h, which may specifically be 1 h, 2 h, 3 h, 4 h, 5 h, 6 h, 8 h, 12 h, 24 h, 48 h, or any value with in a range consisting of any two of the above values, and is not limited herein.

In some embodiments, the surface cleaning treatment includes the dust removal treatment. A flue gas flow rate of the dust removal treatment is 1 L/min-10 L/min, which may specifically be 1 L/min, 2 L/min, 3 L/min, 4 L/min, 5 L/min, 6 L/min, 7 L/min, 8 L/min, 9 L/min, 10 L/min, or any value with in a range consisting of any two of the above values, and is not limited herein.

In some embodiments, a time for the dust removal treatment is 1 h-10 h, which may specifically be 1 h, 2 h, 3 h, 4 h, 5 h, 6 h, 7 h, 8 h, 9 h, 10 h, or any value with in a range consisting of any two of the above values, and is not limited herein.

In some embodiments, a temperature for the dust removal treatment is 100 °C-400 °C, which may specifically be 400 °C, 300 °C, 200 °C, 100 °C, or the like, or may also definitely be other values within the above range, and the present disclosure is not limited thereto.

In the present disclosure, by controlling parameters such as the temperature, time and flotation agent of the surface cleaning treatment, the amount of micro-powder on the surface of the carbon matrix may be reduced through the surface cleaning treatment, and the surface cleanliness of the carbon matrix is improved to ≥65%.

In some embodiments, the surface cleanliness of the carbon matrix is ≥65%, which may specifically be 65%, 70%, 75%, 80%, 85%, 90%, 95%, 98%, or the like, or may definitely be other values within the above range, and is not limited herein.

In some embodiments, the carbon matrix has pores, and the pores include at least one of micropores, mesopores and macropores.

In some embodiments, in the carbon matrix, a volume proportion of the pores with apertures below 2 nm in the total pore volume is greater than or equal to 70%, which may specifically be 70%, 75%, 80%, 85%, 90%, 95%, 99%, etc., or may definitely be other values within the above range, and is not limited herein.

In some embodiments, in the carbon matrix, a volume proportion of the pores with apertures below 5 nm in the total pore volume in the anode material is greater than or equal to 85%, which may specifically be 85%, 87%, 89%, 90%, 92%, 95%, 97%, 99%, etc., or may definitely be other values within the above range, and is not limited herein.

In some embodiments, in the carbon matrix, a volume proportion of the pores with apertures below 10 nm in the total pore volume is greater than or equal to 95%, which may specifically be 95%, 96%, 97%, 98%, 99%, etc., or may definitely be other values within the above range, and is not limited herein.

It may be understood that, by controlling the volume proportion of the pores of the carbon matrix within the above range, the pores can house most of the silicon material, such that silicon segregation formed by deposition of the silicon material on a surface of the carbon matrix is reduced, and the content of the silicon material in the carbon matrix and the distribution uniformity of the silicon material are improved, thereby improving the specific capacity and mechanical properties of the anode material.

In some embodiments, the specific surface area of the carbon matrix is 800 m²/g-2500 m²/g, which may specifically be 800 m²/g, 1000 m²/g, 1200 m²/g, 1500 m²/g, 1800 m²/g, 2000 m²/g, 2200 m²/g, 2500 m²/g, or the like, or may definitely be other values within the above range, which is not limited herein.

In some embodiments, a total pore volume of all pores in the carbon matrix is 0.4 cm³/g-1.5 cm³/g, which may specifically be 0.4 cm³/g, 0.5 cm³/g, 0.6 cm³/g, 0.9 cm³/g, 1.0 cm³/g, 1.2 cm³/g, 1.3 cm³/g, 1.4 cm³/g, 1.5 cm³/g, or the like, or may definitely be other values within the above range, and is not limited herein. It may be understood that, the carbon matrix has abundant pores. These pores can house the silicon material, and reserve spaces for the volume expansion of the silicon material. Preferably, the total pore volume of all the pores in the carbon matrix is 0.6 cm³/g-1.0 cm³/g.

At S20, the carbon matrix and the silicon material are combined to obtain the precursor.

In the present disclosure, the gas-phase active material precursor is used to perform vapor deposition on the carbon matrix, and the active material generated by the gas-phase active material precursor can be filled in the pores of the carbon matrix, such that the specific surface area is reduced, and the problems of rupturing, cracking, etc. of the anode material during rolling are reduced, thereby improving the processability and cycling performance of the anode material.

In some embodiments, the gas-phase active material precursor includes a gaseous silicon source.

In some embodiments, the gaseous silicon source includes at least one of silane, disilane, and trisilane.

In some embodiments, an introduction concentration of the gas-phase active material precursor is 5%-30%, which may specifically be 5%, 8%, 10%, 12%, 15%, 18%, 20%, 23%, 26%, 28%, 30%, or the like, or may also definitely be other values within the above range, and the present disclosure is not limited thereto.

In some embodiments, a temperature for vapor deposition is 400 °C-800 °C, which may specifically be 400 °C, 500 °C, 600 °C, 700 °C, 800 °C, or the like, or may also definitely be other values within the above range, and the present disclosure is not limited thereto.

In some embodiments, a temperature-holding time for vapor deposition is 2 h-25 h, which may specifically be 2 h, 5 h, 10 h, 15 h, 20 h, 25 h, etc., or may also definitely be other values within the above range, and the present disclosure is not limited thereto.

In the present disclosure, by controlling the temperature and time for vapor deposition and the introduction concentration of the gas-phase active substance precursor, a mass ratio of silicon to carbon in the compound can be controlled, such that the anode material prepared by the compound has high capacity and initial coulombic efficiency at the same time.

At S30, the precursor is coated by using the coating material to obtain the anode material, where the surface cleanliness of the anode material is γ≥60%.

In some embodiments, the coating material includes at least one of a carbon material, a metal oxide, or a nitride.

In some embodiments, in S30, the coating material is used to perform a carbon coating treatment on the precursor, and the carbon coating treatment includes at least one of solid-phase carbon coating, liquid-phase carbon coating, or gas-phase carbon coating.

In some embodiments, the carbon coating treatment is the gas-phase carbon coating, and a step includes: a carbon source gas is introduced into the precursor, and thermal cracking is performed on the carbon source gas, so as to obtain the anode material.

In some embodiments, the carbon source gas is hydrocarbon.

In some embodiments, the carbon source gas includes at least one of methane, ethane, propane, ethylene, acetylene, gaseous benzene, gaseous toluene, gaseous xylene, gaseous ethanol, or gaseous acetone.

In some embodiments, an introduction concentration of the carbon source gas is 5%-20%, which may specifically be 5%, 8%, 10%, 12%, 15%, 18%, 20%, or the like, or may also definitely be other values within the above range, and the present disclosure is not limited thereto. Generally, the carbon source gas and a protective atmosphere are mixed and then introduced. Exemplarily, when the introduction concentration of the carbon source gas is 15%, it may be a mixed gas of argon and methane in a volume ratio of 85:15.

In some embodiments, a temperature for thermal cracking is 400 °C-800 °C. Optionally, the temperature may specifically be 400 °C, 500 °C, 600 °C, 700 °C, 800 °C, or the like, or may be other values within the range, which may be selected according to actual requirements, and is not limited herein. Preferably, the temperature for thermal cracking is 500 °C-650 °C.

In some embodiments, a temperature-holding time for thermal cracking is 0.5 h-18 h. The temperature-holding time may specifically be 0.5 h, 1.5 h, 3 h, 5 h, 6 h, 7 h, 8 h, 10 h, 18 h, or the like, or may be other values within the range, which may be selected according to actual requirements, and is not limited herein. Preferably, the temperature-holding time for thermal cracking is 1 h-2 h.

In some embodiments, the coating material includes the metal oxide. The step of coating the precursor includes: the precursor and the coating material are mixed, than subjected to a heat treatment.

In some embodiments, a material of the metal oxide layer includes at least one of oxides of Sn, Ge, Fe, Si, Cu, **Ti,** Na, Mg, Al, Ca, and Zn.

In some embodiments, a material of the nitride layer includes at least one of titanium nitride, vanadium nitride, cobalt nitride, nickel nitride, or carbon nitride.

An example of the present disclosure provides a method for preparing an anode material. The preparation method includes the following steps.

At S11, a carbon matrix and a silicon material are combined to obtain a precursor.

At S21, the precursor is coated by using a coating material, so as to obtain a silicon carbon compound.

At S31, a surface cleaning treatment is performed on the silicon carbon compound, and an anode material is obtained through drying, where surface cleanliness of the anode material is γ≥60%.

It is to be noted that, a surface cleaning treatment mode is the same as the surface cleaning treatment mode in the preparation method of the above second aspect, and thus is not described herein again.

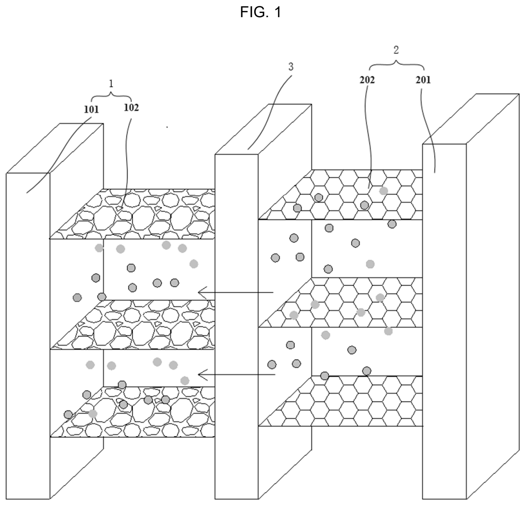

An example of the present disclosure further provides a battery. Examples of the present disclosure further provide a battery. FIG. 1 is a schematic diagram of a discharging state of a battery according to examples of the present disclosure. As shown in FIG. 1, the battery includes a housing and an electrode assembly. The electrode assembly includes a cathode plate 1, an anode plate 2, and a separation film 3. The separation film 3 is disposed between the cathode plate 1 and the anode plate 2. The electrode assembly may be of a laminated structure, which is formed by sequentially alternately stacking the cathode plate 1, the separation film 3, and the anode plate 2. In some other embodiments, the electrode assembly may also be of a winding structure, which is formed by first sequentially stacking and then winding the cathode plate, the separation film, and the anode plate.

In some embodiments, the cathode plate 1 includes a cathode current collector 101 and a cathode active layer 102 disposed on at least one surface of the cathode current collector 101.

In some embodiments, the cathode current collector 101 may use aluminum foil, nickel foil, or the like, or may be a composite current collector disclosed in any related art, for example, but not limited to, a current collector that is formed by combining the foregoing conductive foil (aluminum foil, nickel foil, or the like) and a polymer substrate. The cathode active layer 102 includes a cathode active material, and the cathode active material includes a compound in which metal ions may be reversibly embedded and de-embedded.

In some embodiments, the cathode active material may include a lithium transition metal composite oxide, a sodium transition metal composite oxide, and the like. The lithium transition metal composite oxide contains lithium and at least one element selected from cobalt, manganese, and nickel.

In some embodiments, the cathode active material may include, but is not limited to, at least one of lithium cobalt oxide (LiCoO₂), a lithium-nickel-manganese-cobalt ternary material (NCM), lithium manganate (LiMn₂O₄), lithium nickel manganese oxide (LiNi_{0.5}Mn_{1.5}O₄), or lithium iron phosphate (LiFePO₄).

In some embodiments, the anode plate 2 includes an anode current collector 201 and an anode active material layer 202 disposed on at least one surface of the anode current collector.

In some embodiments, the anode current collector 201 may use at least one of copper foil, nickel foil, stainless steel foil, titanium foil, or a carbon-based current collector, or may be a composite current collector disclosed in any related art, for example, but not limited to, a current collector that is formed by combining conductive foil and a polymer substrate. The anode active material layer 202 includes an anode material, and the anode material is the anode material of the above first aspect or an anode material that is prepared by the above preparation method. The battery provided in the examples of the present disclosure has the advantages of being high in capacity, high in initial coulombic efficiency, long in cycle life, excellent in rate performance, and low in expansion. The battery may be a lithium ion battery, a sodium ion battery, a solid-state electrolyte battery, etc., which is not limited herein.

The examples of the present disclosure are further described below with a plurality of examples. The examples of the present disclosure are not limited to the following specific examples. Changes may be implemented appropriately within the scope of unchanged primary rights.

### Example 1

(1) Commercialized porous carbon was used as a raw material and graded to obtain a carbon matrix precursor with a median particle size Dv50 being 8.6 µm, then a flotation treatment was performed on the carbon matrix precursor, a flotation agent was hexane, a flotation temperature was 25 °C, a flotation time was 24 h, and then upper and lower liquids were separated and dried to obtain a carbon matrix with surface cleanliness being 78%.
(2) The carbon matrix was placed in a CVD (Chemical Vapor Deposition) device, then silane was introduced in the CVD device, a concentration of the silane was controlled at 19%, the temperature was heated to 480 °C, and a reaction was performed for 10 h, so as to obtain a precursor.
(3) The precursor was placed in a reaction furnace, a mixed gas of methane and propylene in a volume ratio of 100:5 was introduced under nitrogen protection, an introduction concentration of the mixed gas was 12%, a heat treatment was performed at 620 °C, and the temperature was held for 2 h, so as to obtain an anode material.

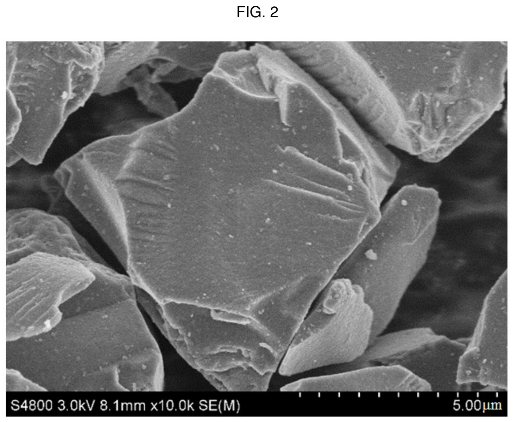

In this example, the anode material included the carbon matrix and a silicon material, and the silicon material was dispersed in the carbon matrix. As shown in FIG. 2, the number of fine powders on the surface of the anode material particles prepared in this example is relatively low, and the surface cleanliness of the anode material γ is ≥ 60%. Other parameters of the anode material were shown in Table 1 and Table 2.

### Example 2

A difference between this example and Example 1 lied in that,
(1) commercialized porous carbon 1 was used as a raw material and graded to obtain porous carbon 2, then a flotation treatment was performed on the porous carbon 2, a flotation agent was hexane, a flotation temperature was 25 °C, a flotation time was 18 h, and then upper and lower liquids were separated and dried to obtain a carbon matrix with surface cleanliness being 70%.

In this example, the anode material included the carbon matrix and a silicon material, and the silicon material was dispersed in the carbon matrix. Other parameters of the anode material were shown in Table 1 and Table 2.

### Example 3

A difference between this example and Example 1 lied in that,
(1) commercialized porous carbon 1 was used as a raw material and graded to obtain porous carbon 2, then a flotation treatment was performed on the porous carbon 2, a flotation agent was pentanol, a flotation temperature was 25 °C, a flotation time was 24 h, and then upper and lower liquids were separated and dried to obtain a carbon matrix with surface cleanliness being 78%.

Subsequent steps were the same as those in Example 1.

In this example, the anode material included the carbon matrix and a silicon material, and the silicon material was dispersed in the carbon matrix. Other parameters of the anode material were shown in Table 1 and Table 2.

### Example 4

A difference between this example and Example 1 lied in that,
(1) commercialized porous carbon 1 was used as a raw material and graded to obtain porous carbon 2, then an electrostatic dust removal treatment was performed on the porous carbon 2, under the driving of a carrier gas, a temperature was set to 230 °C, a flue gas flow rate was 3 L/min, and the electrostatic dust removal treatment was performed for 3.5 h, so as to obtain a carbon matrix with surface cleanliness being 89%.

Subsequent steps were the same as those in Example 1.

In this example, the anode material included the carbon matrix and a silicon material, and the silicon material was dispersed in the carbon matrix. Other parameters of the anode material were shown in Table 1 and Table 2.

### Example 5

(1) Commercialized porous carbon 1 was used as a raw material and graded to obtain porous carbon 2.
(2) The porous carbon 2 was placed in a CVD, then silane was introduced in the CVD device, a concentration of the silane was controlled at 19%, a temperature was heated to 480 °C, and a reaction was performed for 10 h, so as to obtain a precursor.
(3) The precursor was placed in a reaction furnace; a methane gas was introduced, with a concentration being 24%; and a heat treatment was performed at 680 °C, and the temperature was held for 4 h, so as to obtain a silicon carbon compound.
(4) A flotation treatment was performed on the silicon carbon compound, a flotation agent was kerosene, a flotation time was 48 h, and then separation and drying were performed to obtain an anode material.

In this example, the anode material included the carbon matrix and a silicon material, and the silicon material was dispersed in the carbon matrix. Other parameters of the anode material were shown in Table 1 and Table 2.

### Example 6

A difference between this example and Example 1 lied in that, the preparation method further included:
(4) the flotation treatment was performed on a product prepared in step (3), a flotation agent was hexane, a flotation solution was water, a volume ratio of the water to the hexane was 100:1, a flotation time was 20 h, a flotation temperature was 25 °C, and then particles at upper and lower layers were separated, collected, and dried to obtain an anode material.

In this example, the anode material included the carbon matrix and a silicon material, and the silicon material was dispersed in the carbon matrix. Other parameters of the anode material were shown in Table 1 and Table 2.

### Example 7

Commercialized porous carbon 1 was used as a raw material and graded to obtain porous carbon 2, then a flotation treatment was performed on the porous carbon 2, a solvent was water, a flotation agent was kerosene, a flotation temperature was 25 °C, a flotation time was 20 h, and then upper and lower liquids were separated and dried to obtain a carbon matrix with surface cleanliness being 65%.

Subsequent steps were the same as those in Example 1.

### Example 8

(1) Commercialized porous carbon 1 was used as a raw material and graded to obtain porous carbon 2, then a flotation treatment was performed on the porous carbon 2, a solvent was isopropanol, a flotation agent was gasoline, a flotation temperature was 25 °C, a flotation time was 48 h, and then upper and lower liquids were separated and dried to obtain a carbon matrix with surface cleanliness being 76%.
(2) The carbon matrix was placed in a CVD, then silane was introduced in the CVD device, a concentration of the silane was controlled at 19%, a temperature was heated to 480 °C, and a reaction was performed for 10 h, so as to obtain a precursor.
(3) The precursor was placed in a reaction furnace; a methane gas was introduced, with a concentration being 15%; and a heat treatment was performed at 620 °C, and the temperature was held for 5 h, so as to obtain an anode material.

Subsequent steps were the same as those in Example 1.

### Example 9

A difference between this example and Example 4 lied in that,
(1) commercialized porous carbon 1 was used as a raw material and graded to obtain porous carbon 2, then an electrostatic dust removal treatment was performed on the porous carbon 2, under the driving of a carrier gas, a temperature was set to 230 °C, a flue gas flow rate was 1 L/min, and the electrostatic dust removal treatment was performed for 3.5 h, so as to obtain a carbon matrix with surface cleanliness being 65%.

### Example 10

A difference between this example and Example 6 lied in that,
(4) the flotation treatment was performed on the anode material, a solvent was acetone, a flotation agent was oleic acid, a flotation solution was water, a volume ratio of the water to the hexane was 100:1, a flotation time was 28 h, a flotation temperature was 25 °C, and then particles at upper and lower layers were separated, collected, and dried to obtain the anode material.

### Example 11

A difference between this example and Example 1 lied in that,
(1) Commercialized porous carbon 1 was used as a raw material and graded to obtain porous carbon 2, a flotation treatment was performed on the porous carbon 2, a flotation agent was hexane, a flotation time was 24 h, and then upper and lower liquids were separated and dried to obtain a carbon matrix with surface cleanliness being 65%.

### Comparative example 1

A difference between this comparative example and Example 1 lied in that,
(1) commercialized porous carbon 1 was used as a raw material and graded to obtain porous carbon 2, then a flotation treatment was performed on the porous carbon 2, a flotation agent was hexane, a flotation temperature was 25 °C, a flotation time was 10 h, and then upper and lower liquids were separated and dried to obtain a carbon matrix with surface cleanliness being 58%.

In this comparative example, the anode material included the carbon matrix and a silicon material, and the silicon material was dispersed in the carbon matrix. Other parameters of the anode material were shown in Table 1 and Table 2.

### Comparative example 2

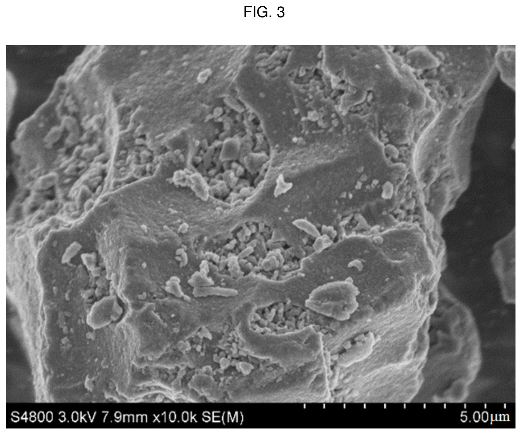

A difference between this comparative example and Example 1 lied in that,
(1) Commercialized porous carbon was used as a raw material and graded to obtain a carbon matrix. As shown in FIG. 3, the number of fine powders on the surface of the anode material particles prepared in this comparative example is relatively more, and the surface cleanliness of the anode material γ is < 60%.

### Performance test

### (1) Method for testing surface shape of anode material:

A surface shape of anode material particles was observed by using a S4800 SEM from HITACHI Company, so as to obtain an electron microscope image of the anode material, micro-powder adhesion of surfaces of 100 anode material particles was randomly observed at 10000 magnification ratios, particles with a particle size being 0.1 µm-1 µm adhering to the surfaces of the anode material particles were defined as micro-powder, the anode material particles with the number of micro-powder on the surfaces of the anode material particles being less than 20 were defined as clean particles, and the number of the clean particles in the 100 anode material particles was counted as A, where the surface cleanliness γ of the anode material was = A/100*100%.

### (2) Liquidity parameters for anode material:

The liquidity parameters for the anode material particles were tested according to the GB/T 1482-2022 "Determination of Metal Powder Flow Properties - Standard Funnel Method (Hall Flowmeter)", so as to obtain a flow parameter t.

### (3) Method for testing specific surface area of anode material or anode material with silicon material removed:

A specific surface area was measured by using a TriStar3000 surface area and pore diameter analyzer from Micromeritics, USA. According to GB/T 19587-2017, "Determination of the Specific Surface Area of Solid Materials by the Gas Adsorption BET Method - Static Capacity Method", a specialized tube for specific surface area measurement was taken after high-temperature drying. The tube was weighed, recording M1, then filled with a certain amount of sample (occupying 1/2 to 2/3 of the volume of the tube), and degassed at 300°C for 1 h. After cooling, the tube was weighed, recording M2, with the sample weight being M2-M1. The sample weight was entered into the computer for instrument testing. The instrument automatically completed the test, read the data, and recorded the test results. It should be noted that after heating the sample to 300°C and purging with nitrogen for 1 h, cooling to room temperature continued under N₂ purge. The test points were taken in the range of 0.05-0.30 g/cm³, with one point taken every 0.05 g/cm³.

### (4) Method for testing oil absorption value of anode material:

According to GB/T 3780.2-2017, "Carbon Black - Part 2: Determination of Oil Absorption Value", or according to the equipment manual, an ASAHI S-500 oil absorption value tester from ASAHISOUKEN, Japan was used for testing. Oil absorption value O was an amount of linseed oil dropwise added when torque due to changes in viscosity characteristics reached 70% of maximum torque, in mL/100 g.

### (5) Test for gas production of anode material:

Carboxymethyl Cellulose (CMC) was dispersed in water according to a mass ratio of 1.4% for gluing, and after uniform dispersion, 10 g of glue liquid and 10 g of the anode material were mixed to obtain slurry; the slurry was put into an aluminum plastic film bag, and the mass of the slurry was recorded; and then sealing was performed to form a sealed aluminum plastic film bag.

The sealed aluminum plastic film bag was fixed at a bottom of a container and completely soaked in water, and a volume of the aluminum plastic film bag was recorded; after a fixation time (24 h), the volume of the aluminum plastic film bag was recorded again; and gas production of a silicon anode material was calculated according to changes in a volume of an aluminum plastic film, in mL/g.

### (6) Method for testing pore volume of anode material or anode material with silicon material removed:

### Etching treatment:

While stirring, 150 mL of an HF acid solution with a mass fraction of 20% was dropwise added to 10 g of the anode material to generate SiF₄ and a H₂ gas and release heat, until there was no gas generated, the supernatant acid solution was removed through centrifugation, then 150 mL of the HF acid solution with the mass fraction of 20% was added to the anode material again, stirring was performed for 12 h, then the supernatant acid solution was removed again through centrifugation, and then the anode material was washed with pure water to neutral and dried, so as to obtain the anode material with the silicon material removed.

A test of an average pore diameter and a pore volume was performed by using an ASAP2460 device from Micromeritics Company, USA, and a pore volume V was calculated within a pore diameter range of 17 Å-3000 Å by using a BJH Desorption cumulative volume of pores model. The percentage of pore volume can be calculated according to the ratio of the micropore volume ( < 2nm), mesopore volume (2-50nm), and macropore volume (>50nm) to the total pore volume.

### (7) Method for testing median particle size of anode material:

A particle size testing method was referred to GB/T 19077-2016. A laser particle size analyzer was used for convenient determination of volume-based cumulative particle size distribution, such as a Mastersizer 3000 laser particle size analyzer from Malvern Instruments Co., Ltd., UK. Dv50 indicated a corresponding particle size when the percentage of cumulative particle size distribution reached 50%, that is, the median particle size.

### (8) Method for testing average particle size of silicon material:

Particle sizes of 20 silicon materials were randomly tested by using a high-power microscope, and then an average value of the particle size of the plurality of silicon materials was calculated, which was the average particle size of the silicon materials.

### (9) Thickness of coating layer:

A section treatment was performed on the material by using an FIB-SEM device, 10 particles were randomly taken in the SEM, each particle was measured for 3 times for the thickness of the coating layer, and measurement was performed to obtain an average thickness of the coating layer.

### (10) Type of silicon material:

The type of the silicon material was confirmed by using a diffraction peak measured using an XRD.

### (11) Test for mass content of silicon element in anode material:

A box atmosphere furnace (Model: SA2-9-17TP) was for burning under an oxygen atmosphere, causing silicon in a sample to react with silicon oxide to become silica; and carbon was burned and discharged as carbon dioxide, and the mass content of the silicon in the anode material was weighed and calculated.

### (12) Test for mass content of carbon element in anode material:

A G4 ICARUS HF/CS-i infrared carbon sulfur analyzer from Bruker/Eltra, Germany was used; a sample was burned at a high temperature in an oxygen-enriched state, and the contained carbon was oxidized into carbon dioxide and enters an infrared detector with a carrier gas; and quantitative statistics was performed on changes in the infrared absorption wavelength intensity of a carbon dioxide signal, so as to calculate the content of the carbon.

### (13) Test for the oxygen content by mass in the anode material:

Using the oxygen, nitrogen, and hydrogen elemental analyzer (model ONH2000), the oxygen content by mass in the anode material was determined.

Testing procedure: a sample of 5mg ± 0.5mg for testing was accurately weighed using a high-precision balance. An appropriate amount of aluminum foil was used as a flux to wrap the sample well, which was then placed in a graphite crucible under a helium gas flow. The crucible was heated to about 2300°C for melting. The oxygen in the sample was released in the form of carbon monoxide or carbon dioxide, separated from other gas products, and then directed into the infrared detector for measurement. The standard sample chosen for instrument calibration should have oxygen content close to that of the sample to be tested, with the average value taken from two parallel tests for each sample. Other settings: degassing time of 45 seconds, degassing power of 5.8kW, flushing time of 20 seconds, stabilization time of 40 seconds, infrared integration delay of 2 seconds, analysis time of 60 seconds, and analysis power of 5.5kW.

### (14) Test for electrical performance of anode material:

### A: method for testing capacity efficiency:

An anode slurry was prepared according to a mass ratio of an anode material, conductive carbon black, and polyacrylic acid (PPA) being 75:15:10, coated on copper foil, and dried and prepared into an anode plate. A metallic lithium sheet was used as a counter electrode, and a button battery was assembled in a glove box filled with argon. At a current density of 0.1 C, a charging and discharging test was performed on the button battery in a charging and discharging interval of 0.005 V-1.5 V, so as to obtain the first discharging specific capacity and initial coulombic efficiency (ICE) of the button battery.

### B: finished product cycling test method:

The anode material, a conductive agent, and a binder were dissolved and mixed in a solvent according to a mass percentage of 94:1:5, a solid content was controlled at 50%, the mixture was coated on a copper foil current collector, and vacuum drying was performed to prepare an anode plate; and then, a ternary cathode plate prepared by a traditional mature process, 1 mol/L of a LiPF₆/ethyl cellulose+dimethyl carbonate+ethyl methyl carbonate (v/v=1:1:1) electrolyte solution, a polypropylene (Celgard2400) diaphragm, and a housing were assembled into a 18650 cylindrical single-cell battery by using a conventional production process. A charging and discharging test of the cylindrical battery was performed on a LAND battery test system of Wuhan Jinnuo Electronics Co., Ltd., at a normal temperature condition, charging and discharging were performed at a constant current of 0.2 C, charging and discharging voltages were limited at 2.75-4.2 V, a cycling performance test was performed, and after 500 cycles of charging and discharging, a capacity retention rate of 500 cycles was obtained.

The capacity retention rate at 10C/1C was tested by dividing a capacity measured through 10C constant current charging and discharging by a capacity measured through 1C constant current charging and discharging.

Test results of Example 1-Example 11 (abbreviated as S1-S11) and Comparative example 1 to Comparative example 2 (abbreviated as D1-D2) prepared according to the above method were shown in Table 1-Table 2.

**Table 1 Performance parameters of anode material of examples and comparative examples**

| Sample | γ (% ) | t (s/5 0 g) | Specific surface area (m²/g) | Gas productio n value (mL/g/day ) | Oil absorptio n value (mL/100 g) | Pore volum e (cm³/g ) | Volume proportion (%) of mesopores | Mass percentag e content of oxygen (wt%) | Mass percentag e content of carbon (wt%) | Mass percentag e content of silicon (wt%) | Mass ratio of silicon to carbon |
|---|---|---|---|---|---|---|---|---|---|---|---|
| S1 | 75 | 48 | 1.3 | 0.09 | 54 | 0.005 | 46 | 0.9 | 49.5 | 50 | 1.01 |
| S2 | 61 | 45 | 1.5 | 0.13 | 50 | 0.009 | 55 | 1.0 | 49.9 | 49.1 | 0.98 |
| S3 | 79 | 38 | 1.1 | 0.073 | 55 | 0.006 5 | 34 | 1.4 | 45.1 | 53.5 | 1.19 |
| S4 | 88 | 29 | 0.8 | 0.048 | 49 | 0.007 | 78 | 1.1 | 40 | 58.9 | 1.47 |
| S5 | 82 | 33 | 0.9 | 0.045 | 51 | 0.005 5 | 56 | 1.7 | 48.4 | 49.9 | 1.03 |
| S6 | 93 | 25 | 0.7 | 0.0012 | 52 | 0.006 7 | 49 | 0.9 | 47.5 | 51.6 | 1.09 |
| S7 | 65 | 42 | 1.8 | 0.06 | 56 | 0.007 8 | 52 | 0.93 | 50.1 | 48.9 | 0.97 |
| S8 | 76 | 78 | 1.5 | 0.15 | 61 | 0.009 | 46 | 1.2 | 50.9 | 47.9 | 0.94 |
| S9 | 62 | 23 | 2.4 | 0.19 | 78 | 0.009 1 | 49 | 0.8 | 50.1 | 49.1 | 0.98 |
| S10 | 74 | 39 | 0.2 | 0.045 | 39 | 0.008 9 | 55 | 0.78 | 49.3 | 50 | 1.01 |
| S11 | 62 | 87 | 2.9 | 0.014 | 45 | 0.009 | 68 | 0.8 | 49.1 | 50.3 | 1.02 |
| D1 | 45 | 52 | 3.2 | 1.5 | 85 | 0.023 | 41 | 0.93 | 49.0 | 50 | 1.02 |
| D2 | 32 | 78 | 4.5 | 6.8 | 86 | 0.004 5 | 44 | 1.5 | 48.9 | 49.6 | 1.01 |

**Table 2 Battery performance test of examples and comparative examples**

| Sample | First discharging specific capacity mAh/g | Initial coulombic efficiency % | Capacity retention rate of 500 cycles % | Capacity retention rate at 10C/1C % |
|---|---|---|---|---|
| S1 | 1952 | 92.6 | 91.0 | 46.9 |
| S2 | 1925 | 92.7 | 90.0 | 40 |
| S3 | 2197 | 93.1 | 91.8 | 49 |
| S4 | 2379 | 92.4 | 92.1 | 50 |
| S5 | 1939 | 92.1 | 91.5 | 48.4 |
| S6 | 1938 | 92.3 | 92.8 | 53 |
| S7 | 1923 | 92.5 | 90.1 | 39.1 |
| S8 | 1916 | 92.2 | 91.2 | 46.1 |
| S9 | 1918 | 92.0 | 90.6 | 45 |
| S10 | 1929 | 93.0 | 91.0 | 47.2 |
| S11 | 1902 | 92.4 | 90.4 | 45.9 |
| D1 | 1889 | 92.4 | 88.5 | 23 |
| D2 | 1901 | 91.8 | 86.9 | 20 |

According to test data of Example 1-Example 11, it might be learned that, in the present disclosure, by controlling the surface cleanliness of the anode material, the micro-powder content on the surface of the anode material might be reduced, such that the side reactions between the anode material and the electrolyte solution were reduced, and consumption of active lithium ions was reduced, thereby improving the specific capacity and initial coulombic efficiency of the anode material. The anode material with high surface cleanliness could reduce bonding or aggregation between the particles, such that the uniformity of the anode material was improved, and the gas production phenomenon of the anode material was further reduced, such that the anode material could have high first discharging specific capacity and initial coulombic efficiency, and excellent rate performance and cycling performance.

According to the test data of Example 1 and Example 2, it might be learned that, since the flotation time of Example 2 was shortened, the surface cleanliness of the carbon matrix reduced, and the surface cleanliness of the anode material after the carbon matrix and the silicon material were compounded also reduced. The gas production value of the anode material was increased compared to that in Example 1, and the capacity retention rate of 500 cycles of the anode material was also reduced.

According to the test data of Example 1 and Examples 3-4, it might be learned that, for different flotation agents or different surface cleaning processes, as long as the surface cleanliness and liquidity parameters of the anode material were controlled within rational ranges, the anode material could have good rate performance and cycling performance, and the gas production value could be controlled at a low level.

According to the test data of Example 1 and Example 5 or 6, it might be learned that, in Example 5, the flotation treatment was performed on the silicon carbon compound, and after the flotation treatment, the surface cleanliness of the anode material was improved. In Example 6, a secondary flotation treatment was performed on the anode material prepared in Example 1, the surface cleanliness of the anode material was also further improved, and the liquidity parameters of the anode material were further reduced, such that the liquidity of the anode material particles was better, the gas production value of the anode material reached a lowest state, and the first discharging specific capacity of the anode material was slightly reduced, but the capacity of 500 cycles and the capacity retention rate at 10C/1C were increased.

According to the test data of Example 1 and Example 7 or 9, it might be learned that, since the surface cleanliness of the carbon matrix was slightly reduced compared to that in Example 1, the surface cleanliness of the anode material was also reduced, the micro-powder on the surface of the anode material increased, and the initial coulombic efficiency of the anode material, the capacity of 500 cycles, and the capacity retention rate at 10C/1C were all slightly reduced. Preferably, the surface cleanliness γ is ≥70%, and the liquidity parameter t is ≤50 s/50 g.

According to the test data of Example 1 and Example 11, it might be learned that, the porous carbon was not subjected to a grading treatment, the uniformity of the carbon matrix particles without the grading treatment was poor, the liquidity coefficient of the prepared anode material was increased, that is, the liquidity deteriorated, and a portion of the particles aggregated and bonded together, causing the first discharging specific capacity of the anode material to slightly reduce, and also leading to slight reduction in the initial coulombic efficiency, the capacity of 500 cycles, and the capacity retention rate at 10C/1C.

According to the test data of Example 1 and Comparative example 1, it might be learned that, the time for the flotation treatment of the porous carbon was too short, the surface cleanliness of the carbon matrix was low, after the carbon matrix and the silicon material were compounded, the surface cleanliness of the anode material was further reduced, and the gas production value of the anode material was too high, which not facilitated the cycling stability of the anode material, and the capacity retention rate of the anode material was also significantly reduced.

According to the test data of Example 1 and Comparative example 2, it might be learned that, the porous carbon was only subjected to the grading treatment, and was not subjected to the surface cleaning treatment. Although the liquidity parameter of the anode material could meet requirements, due to the increased micro-powder on the surface of the anode material, gas production of the anode material was greatly increased, the side reactions with the electrolyte solution intensified, the first discharging specific capacity of the anode material was reduced, and the initial coulombic efficiency, the capacity of 500 cycles, and the capacity retention rate at 10C/1C were also significantly reduced.

## Claims

1. A anode electrode material, comprising a carbon matrix and an active substance, wherein at least a portion of the active substance is distributed in the carbon matrix; and
surface cleanliness of the anode material is γ, and γ≥60%, wherein the surface cleanliness of the anode material is measured by using the following test method:
obtaining an electron microscope image of the anode material, observing micro-powder adhesion of surfaces of 100 anode material particles at 10000 magnification ratios randomly, defining, as micro-powder, particles with a particle size being 0.1 µm-1 µm adhering to the surfaces of the anode material particles, defining, as clean particles, the anode material particles with the number of micro-powder on the surfaces of the anode material particles being less than 20, and counting the number of the clean particles in the 100 anode material particles as A, wherein the surface cleanliness of the anode material is γ= A/100*100%.

2. The anode material according to claim 1, wherein the anode material has at least one of the following features:
(1) γ is 60%, 65%, 70%, 75%, 80%, 85%, 90%, 95%, 98%, or any value within any range composed of any two of the above range;
(2) y≥70%.

3. The anode material according to claim 1, wherein the anode material has at least one of the following features:
(1) a liquidity parameter of the anode material is t≤80 s/50g;
(2) a liquidity parameter of the anode material is t, and 10 s/50 g≤t≤50 s/50 g.

4. The anode material according to claim 1, wherein the anode material has at least one of the following features:
(1) a specific surface area of the anode material is ≤5 m²/g;
(2) a specific surface area of the anode material is 0.1-2.5 m²/g.

5. The anode material according to claim 1, wherein the anode material has at least one of the following features:
(1) a gas production value of the anode material is ≤1 mL/g/day;
(2) a gas production value of the anode material is ≤0.1 mL/g/day.

6. The anode material according to claim 1, wherein an oil absorption value of the anode material is 30 mL/100 g-80 mL/100 g.

7. The anode material according to claim 1, wherein the anode material has pores, and a total pore volume of the anode material is ≤0.1 cm³/g.

8. The anode material according to claim 7, wherein the pores of the anode material comprise mesopores, and a volume proportion of a pore volume of the mesopores in a total pore volume of the anode material is 25%-95%.

9. The anode material according to claim 1 or 2, wherein the anode material has at least one of the following features:
(1) the anode material has a coating layer, the coating layer is located on at least a portion of a surface of the carbon matrix and the active substance;
(2) the anode material has a coating layer, and a thickness of the coating layer is 0.1 nm-3000 nm; or
(3) the anode material has a coating layer, and a material of the coating layer comprises at least one of carbon material, a metal oxide, or a nitride.

10. The anode material according to any one of claims 1 to 9, wherein the anode material has at least one of the following features:
(1) the carbon matrix comprises at least one of hard carbon, soft carbon, graphite, mesocarbon microbeads, activated carbon, porous carbon, mesoporous carbon, or carbon gel;
(2) the active substance comprises a silicon material, and the silicon material comprises at least one of a silicon element, a silicon oxide material, or a silicon alloy;
(3) the active substance comprises a silicon material, and the silicon material comprises amorphous silicon; or
(4) the active substance comprises a silicon material, and an average particle size of the silicon material is 1 nm-100 nm.

11. The anode material according to claim 10, wherein the anode material has at least one of the following features:
(1) the active substance comprises a silicon material, and an average particle size of the silicon material is 1 nm-10 nm;
(2) the active substance comprises a silicon material, and an anode material with the silicon material removed has pores, and an average pore diameter of the pores is 1.0 nm-5.2 nm;
(3) the active substance comprises a silicon material, and a specific surface area of an anode material with the silicon material removed is 800 m²/g-2500 m²/g; or
(4) the active substance comprises a silicon material, and a total pore volume of an anode material with the silicon material removed is 0.4 cm³/g-1.5 cm³/g.

12. The anode material according to any one of claims 1 to 11, wherein the anode material has at least one of the following features:
(1) a mass percentage content of oxygen in the anode material is ≤5 wt%;
(2) a mass percentage content of carbon in the anode material is 30 wt%-60 wt%;
(3) the active substance comprises a silicon material, and a mass percentage content of silicon in the anode material is 30 wt%-65 wt%; or
(4) the active substance comprises a silicon material, and a mass ratio of the silicon to the carbon in the anode material is 0.8-2.0.

13. The anode material according to any one of claims 1 to 12, wherein a median particle size Dv50 of the anode material is 1 µm-30 µm.

14. A battery, comprising the anode material according to any one of claims 1 to 13.
